# EUROPEAN PATENT SPECIFICATION

(11) **EP 0 420 242 B1**
(45) Date of publication and mention of the grant of the patent: **13.12.1995**
(21) Application number: 90118572.8
(22) Date of filing: 27.09.1990
(51) Int. Cl.: C08G 18/10, C08G 18/00, C08G 18/48

(54) **An impact resistant polyurethane foam**
Ein schlagzäher Polyurethanschaum
Une mousse de polyuréthane résistant au choc

(30) Priority: 29.09.1989 KR 8914040; 23.02.1990 KR 902337
(43) Date of publication of application: 03.04.1991
(73) Proprietor: Dongsung Chemical Co., Ltd., Saha-Ku Pusan (KR)
(72) Inventor: Jin Suk, Choi, Saha-ku, Pusan (KR); Jae Myung, Lee, Pusanjin-ku, Pusan (KR); Hyeong Soo, Kim, Pusanjin-ku, Pusan (KR)
(74) Representative: Weber, Dieter, Dr.

(56) References cited:
- DE-A- 3 323 872
- FR-A- 1 213 181
- CHEMICAL ABSTRACTS, vol. 94, no. 5, March 1981, ref, no. 66737t ; & JP-A-55135128

## Description

### TECHNICAL FIELD OF INVENTION

This invention relates to an impact resistant material composed of polyether-based micro-cellular polyurethane foam : more particularly, however, this invention relates to the impact resistant polyurethane foam having a remarkable impact resistance effect and recovery force and furthermore a controlled specific gravity.

### BACKGROUND OF THE INVENTIUON

Among the existing impact resistant materials used hitherto, the polyurethane urea elastomer, first of all, has been widely used in various forms of molding on an industrial scale but, the elastomer in its actual application has suffered from the following disadvantages such as a high cost in manufacture and high specific gravity, let alone disproportionate relations among physical property, impact resistant effect, and recovery force.

Secondly, the mirocellular foamed impact resistant material has also recognized disadvantage in that, to decrease the change of impact resistant effect owing to the variation of outer temperature, the amine-substituted polyol which is made through the specifically complicated polymerization reaction, and aromatic vinyl monomer requiring high costs have been inevitably used. Further, in order to supplement the impact resistant effect, various kinds of fillers including asphalts and adhesives have been separately added in a large amount.

Under such disadvantage, the usual impact resistant foam led to the increase in their specific gravities and costs. So, their practical usage has been reduced and in the related fields, their application scope is quite limited.

Hence, unlike the usual impact resistant foam using the specifically manufactured amine-substituted polyol and various kind of aromatic vinyl-type monomer, the completion of this invention is based upon the fact that, although the use of simple propyleneoxide-polymerized polyol having divalent to quadrivalent hydroxyl functional groups, by the selection of reaction accelerator and surfactant, it is possible to change the foamed structure to obtain the remarkable impact-resistant effect and recovery force.

The document Chemical Abstracts, 94: 6673t (1981) = JP-A-55 135 128 discloses semirigid polyurethane foams having reduced shrinkage and voids and containing 5 to 30 % (on polyol weight) of inorganic particles having a particle size of at most 3 »m. These polyurethane foams are obtained by reaction of a trifunctional polyol, a difunctional polyol, a tetrafunctional polyol and a polyfunctional isocyanate, such as diphenylmethane diisocyanate.

The FR-A-1 213 181 describes a process for the production of a polyurethane having improved elasticity and permanent deformation by reacting a polyisocyanate with a condensation product of a polyfunctional polyamine, polyalcohol or aminoalcohol with propylene oxide or butylene oxide, the use of a trio being preferred.

Therefore, it is an object of this invention, by correcting some disadvantage from which the usual impact resistant foams have suffered, to provide a new type of impact resistant foam whose physical property is remarkably improved, through the preparation of foamed molding.

This object is solved by a polyurethane foam according to the attached claim.

### DETAILED DESCRIPTION OF THE INVENTION

The impact resistant foam according to this invention has an irregular interpenetrating network structure.

This invention can be described in more detail based upon the manufacturing method.

First of all, the method of manufacturing the impact resistant foam according to this invention has two major method as follows :

The 1st Method(hereinafter referred to as "Prepolymer Method")

In line with the manufacture of the foamed impact resistance material in micro-cell phase, composed of polyether-polymerized polyurethane.
A) Manufacturing prepolymer through the second step addition polymerization reaction from diisocyanate monomer and the poly(propyleneoxide)diol (hydroxyl value of from 30 ∼ 500 mg KOH/g) ;
B) Mixing and agitating a poly(propyleneoxide)diol having two hydroxyl functional groups at a chain end and a hydroxyl value of from 25 to 100mg KOH/g, a poly(glycerin/propyleneoxide)-triol having three hydroxyl functional groups at a chain end and a hydroxyl value of from 20 to 1,000mg KOH/g, a poly(ethylenediamine/propyleneoxide)-tetraol having four hydroxyl functional groups at a chain end and a hydroxyl value of from 50 to 220 mg KOH/g, plasticizer, organic siloxane, and the other additives set out in the claim including reaction accelerator to manufacture the resin ;
C) Pre-heating the above two component A) and B) at approx. 40 to 60° C, and mixing, and rapid-agitating to manufacture the foamed molding by casting.

If necessary, agitating rapidly the component and casting into the mold which was preheated at the temperature of 50 ∼ 70° C and already treated with the releasing agent : here, the mold index may be available from 1.0 to 2.0 according to its use. After casting, molding it in the mold for about five to ten minutes, and demolding. Then, have it post-cured in the air for about 24 hours, and thus, the impact resistant foam in an optimum state may be obtained.

Under the manufacture by the Prepolymer Method, the above 2nd step addition polymerization reaction is conducted in the presence of dried inert gas at the temperature of approx. 50 to 120°C. At this moment considering the mixing ratio between the following prepolymer and resin and also, considering the presence ratio between soft segment and hard segment and viscosity, deciding the amount of isocyanate monomer and the polyol in polymerization, and reducing pressure, and evaporizing the gas, and manufacturing the prepolymer so that the residual isocyanate content may be in the range of from 5% to 20% by weight.

In manufacturing the resin B) i.e. mixing the polyols with the poly(propyleneoxide)diol and the additives the final water content should be in the range of from 0.3 to 3.0 by weight.

Here, for the dispersion effect and the speed modulation of interpenetrating-network formation reaction, the following diamines and organic metals are used by rapidly agitating and dispersing into the diol monomer or propyleneoxide-based polyols having a hydroxyl valve of from 45 to 800mg KOH/g : tetramethylethylene diamine, tetraethylmethylene diamine, diethylpiperazine, triethylene diamine and stannous octoate, dibuthylene diacetate, sodium bicarbonate, lead octate, potassium acetate.

Aromatic diisocyanates according to the invention may be the following : toluene diisocyanate, xylene diisocyante, 3,3'-dimethyldiphenyl-4,4'-diisocyanate, paraphenylenediisocyanate, 4,4'-methylene-bis(phenylisocyanate).

The aromatic plasticizers are selected from dimethylphthalate, diethylphthalate, diisobutylphthalate, dibutylphthalate, dioctylphthalate, dinonlphthalate, diisooctylphthalate, diisodecylphthalate, dipropyleneglycolbenzoate, tricresylphosphate, octyldiphenylphosphate, cresyldiphenylphosphate.

As a polyalkyl or polyalkoxy siloxane polymethyl siloxane or polyoxyethylene siloxane may be used.

The 2nd Method(hereinafter referred to as "One Shot Method")

An impact resistant microcellular-foam composed of polyether-based polyurethane is manufactured as follows:
A) Pre-heating diisocyanate monomer in the temperature of approx. 20 to 60° C ;
B) Mixing the propyleneoxide-based polyols having two to four hydroxyl functional groups, the diamine and the additives 5 - 8 and agitating rapidly to manufacture the resin ;
C) Agitating rapidly said A(isocyanate) and B(resin) preheated at approx. 40 to 60° C, and manufacturing the foamed moldings.

In the case of the One Shot Method, its general manufacturing process is the same as that of the Prepolymer Method. However, in the manufacturing process of the resin B) it is rather desirable to use the higher molecular weight(2 times or 3 times) of polyol than the Prepolymer Method so as to avoid the maldistribution of hard segment.

The impact resistant material of this invention is based upon the manufacture as explained in above : following the first reaction of primary hydroxy, water, and isocyanate functional group, the complex of urethane and urea is formed and by the reaction heat at this moment, the irregular network structure is formed from the second interpenetrating network formation such as the complex of biuret and allophanate. The reaction between water and isocyanate leads to the occurence of CO₂ gas, which is evenly dispersed by organic siloxane. Thus, there remains a nearly same presence ratio between closed cell and continued cell.

When impact is given from the outside, therefore, the first cushioning action is made by closed cell and continued cell and the impact energy is absorbed by the segment within the irregular network structure.

In the meantime, when any material is strained by impact its recovery is available by the elasticity of two functional polyols and by the maldistribution of closed cell. On the other hand, the aromatic plasticizer has a role of delaying the excessive elasticity, so that the plasticizer controls the balance adequately between impact resistance and strain recovery.

The impact resistant material according to the invention has the following advantages compared with the existing materials.
1) Since the invention does not use an amine-substituted polyol and fillers and the process used is not complicated, its manufacturing costs are very reasonable.
2) The invention allows a variety of specific gravity and its applicable scope is very wide.
3) While the existing foamed impact resistant material according to the prior art has the effect less than 85%, the foamed impact resistance material according to this invention has more than 92% recovery in KSM testing method, that is a permanent compression set of less than 5% according to KSM 6518 and about 8% rebound elasticity. Especially, at a temperature below zero, hardness is more or less increasing but, the impact resistance force is on rapid increase, thereby showing about 2% in elasticity.
4) According to KSM-6518 test, the permanent compression set of the existing impact resistant foam according to the prior art is more than 10% at room temperature, while the permanent compression set in this invention is about 2% in spite of the same ether-type.
5) In the foaming process, this invention can use the existing polyurethane foaming equipment without additional facilities. For example, the foaming process can be easily conducted by such methods as molding, slave, spray, and RIM.
6) A further advantage in the foamed structure is connected with superior adhesion and thus, there is no difficulty to adhere it to the applicable part.

As described in the above, the impact resistant foam according to this invention has several advantages, so that it can be used in the industry requiring impact resistance such as automobile, factory facilities, housing interior, official automation equipment as well as in rebound proof/sound proof fields. Further, it can be favourably used in the field of various sports items such as mattress, glove, board, and protector as a wider application.

### EXAMPLE 1 :

Reacting poly(propylene oxide) having a hydroxyl value of 30 mg KOH/g with 4,4'-methylene-bis(phenylisocyanate) at the temperature of 100° C while adding dried inert gas, and thus, manufacturing the prepolymer containing residual isocyanate of 19% by weight.

On the other hand, mixing the polyol such as poly(propylene oxide), poly(glycerin/propylene oxide), and poly(pentaerythritol/propylene-oxide) having a hydroxy value of 56 mg KOH/g each based upon the equivalence ratio of 3:2:4 respectively. As additives, adding 3 pbw 1,6-hexamethylene diamine as reaction accelerator, 6 pbw of a known organo metal reaction accelerator, rapidly agitated and dispersed into poly(propylene oxide), and 3 pbw polyethylene siloxane respectively, per 100 pbw polyol. As plasticizers, adding 20 pbw tricresylphosphate(TCP) per 100 pbw polyol. At the increased temperature of 80° C, agitating and mixing the compound for 1.5 hours to manufacture the resin whose water content is in the range of 1.0 ± 0.01 by weight. Then, the above manufactured prepolymer and resin are preheated at the temperature of 50° C and molding takes place in accordance with the aforementioned method. As a result, the physical property of molding's specimens is shown in Table 1.

**Table 1**

| (Physical properties of specimen having 10mm in thickness) | | | | | |
|---|---|---|---|---|---|
| Equivalent ratio between isocyanate and hydroxy | 1.30 | 1.25 | 1.20 | 1.15 | 1.10 |
| Specific gravity of molding(g/cc) | 0.40 | 0.40 | 0.40 | 0.40 | 0.40 |
| Hardness(Shore C) | 37 | 36 | 35 | 33 | 30 |
| Rebound(%) | 6 | 6 | 7 | 7 | 8 |
| Tensile strength(kg/cm² ) | 11 | 10 | 10 | 9 | 8 |
| Elongation(%) | 220 | 220 | 220 | 220 | 220 |
| Tear strength(kg/cm) | 4.5 | 4.4 | 4.3 | 4.3 | 3.1 |
| Compression set (%) | 2 | | | | |

Where, 1) Mold temperature is 60° C. 2) Cream time/rising time/tack free time/demolding time is 7 sec./90 sec./60 sec./7 min. respectively, 3) Free-blown specific gravity is 0.15g/cc. 4) The testing condition of physical property is based upon KSM-6518 testing method of the Korean Industrial Standard at the atmospheric temperature of 20° C.

### EXAMPLE 2 :

Reacting poly(propyleneoxide) having a hydroxyl value of 50 mg KOH/g with 4,4'-methylene-bis(phenylisocyanate) at the temperature of 100°C while adding dried inert gas, and thus, manufacturing the prepolymer containing residual isocyanate of 15% by weight.

On the other hand, mixing poly(propyleneoxide) having hydroxyl value of 37, poly(glycerin/propyleneoxide) having a hydroxy value of 48 mg KOH/g, and poly(ethylenediamine/propyleneoxide) having a hydroxy value of 56 mg KOH/g based upon the equivalent ratio of 2:1:2 respectively. As additives, adding 3 pbw 1,6-hexamethylene diamine as reaction accelerator, 5 pbw of a known organo metal reaction accelerator, rapidly agitated and dispersed into poly(propyleneoxide), and 2 pbw polyethylene siloxane respectively, per 100 pbw polyol. As plasticizers, adding 10 pbw TCP per 100 pbw polyol. At the increased temperature of 80° C, agitating and mixing the compound for 1.5 hours to manufacture the resin whose water content is in the range of 1.50± 0.01 by weight.

Other processing is conducted in a same manner as do in EXAMPLE 1. As a result, the physical property of molding's specimen is shown in Table 2.

**Table 2**

| (Physical properties of specimen having 10mm in thickness) | | | | | |
|---|---|---|---|---|---|
| Equivalent ratio between isocyanate and hydroxy | 1.40 | 1.35 | 1.30 | 1.25 | 1.20 |
| Specific gravity of molding(g/cc) | 0.38 | 0.38 | 0.38 | 0.38 | 0.38 |
| Hardness(Shore C) | 45 | 48 | 48 | 46 | 43 |
| Rebound (%) | 5 | 5 | 5 | 5 | 5 |
| Tensile strength(kg/cm² ) | 12.3 | 12.0 | 12.0 | 11.6 | 11.0 |
| Elongation(%) | 220 | 220 | 240 | 240 | 240 |
| Tear strength(kg/cm) | 6.8 | 6.1 | 5.8 | 4.8 | 3.7 |
| Compression set(%) | 2 | | | | |

Where, 1) Mold temperature is 60° C, 2) Cream time/rising time/tack free time/demolding time is 6 sec./90 sec./50 sec./7 min. respectively, 3) Free-blown specific gravity is 0.15g/cc. 4) The testing condition of physical property is based upon KSM-6518 testing method of the Korean Industrial Standard at the atmospheric temperature of 20° C.

### EXAMPLE 3 :

Reacting poly(propyleneoxide) having hydroxyl a value of 200 mg KOH/g with 4,4'-methylene-bis(phenylisocyanate) at the temperature of 100° C while adding dried inert gas, and thus, manufacturing the prepolymer containing residual isocyanate of 15% by weight.

On the other hand, mixing poly(propyleneoxide) having a hydroxyl value of 28 mg KOH/g, poly(glycerin/propyleneoxide) having a hydroxy value of 56 mg KOH/g and poly(pentaerythritol/propyleneoxide) having a hydroxy value of 110 mg KOH/g based upon the equivalent ratio of 1:1.5:2 respectively. As additives adding 3 pbw 1,6-hexamethylene diamine as reaction accelerator, 6 pbw of a known organo metal reaction accelerator, rapidly agitated and dispersed into poly(propyleneoxide), and 2 pbw polyethylene siloxane respectively, per 100 pbw polyol. As plasticizers, adding 30 pbw dioctylphthalate(D.O.P.) per 100 pbw polyol At the increased temperature of 80° C, agitating and mixing the compounds for 1.5 hours to manufacture the resin whose water content is in the range of 2.00 ± 0.01 by weight.

Other processing is conducted in a same manner as do in EXAMPLE 1. As a result, the physical property of molding a specimen is shown in Table 3.

**Table 3**

| (Physical properties of specimen having 10mm in thickness) | | | | | |
|---|---|---|---|---|---|
| Equivalent ratio between isocyanate and hydroxy | 1.80 | 1.70 | 1.60 | 1.50 | 1.40 |
| Specific gravity of molding(g/cc) | 0.26 | 0.26 | 0.26 | 0.26 | 0.26 |
| Hardness(Shore C) | 36 | 33 | 26 | 48 | 46 |
| Rebound(%) | 6 | 6 | 6 | 6 | 6 |
| Tensile strength(kg/cm² ) | 11 | 10 | 9 | 8 | 7 |
| Elongation(%) | 240 | 220 | 220 | 220 | 220 |
| Tear Strength(kg/cm) | 4.2 | 4.0 | 3.4 | 3.0 | 2.0 |
| Compression set (%) | 2 | | | | |

Where, 1) Mold temperature is 60° C, 2) Cream time/rising time/tack free time/demolding time is 6 sec./100 sec./70 sec./7 min. respectively, 3) Free-blown specific gravity is 0.086g/cc, 4) The testing condition of physical property is based upon KSM-6518 testing method of the Korean Industrial Standard at the atmospheric temperature of 20°C.

### EXAMPLE 4 :

Reacting poly(propyleneoxide) having a hydroxyl value of 300 mg KOH/g with 4,4'-methylene-bis(phenylisocyanate) at the temperature of 100° C while adding dried inert gas, and thus, manufacturing the prepolymer containing residual isocyanate of 20% by weight.

On the other hand, mixing poly(propyleneoxide) having a hydroxy value of 44 mg KOH/g, poly(glycerin/propyleneoxide) having a hydroxy value of 28 mg KOH/g and poly(pentaerythritol/propyleneoxide) having a hydroxy value of 90 mg KOH/g based upon the equivalent ratio of 2:1:2 respectively. As additives, adding 4 pbw 1,6-hexamethylene diamine as reaction accelerator, 6 pbw of a known organo metal reaction accelerator, rapidly agitated and dispersed into poly(propyleneoxide), and 2 pbw polyethylene siloxane respectively, per 100 pbw polyol. As plasticizers, adding 35 pbw TCP per 100 pbw polyol. At the increased temperature of 80°C, agitating and mixing the compound for 1.5 hours to manufacture the resin whose water content is in the range of 2.0 ± 0.01 by weight.

Other processing is conducted in a same manner as do in EXAMPLE 1. As a result, the physical property of molding a specimen is shown in Table 4.

**Table 4**

| (Physical properties of specimen having 10mm in thickness) | | | | | |
|---|---|---|---|---|---|
| Equivalent ratio between isocyanate and hydroxy | 1.65 | 1.60 | 1.55 | 1.50 | 1.45 |
| Specific gravity of molding(g/cc) | 0.20 | 0.20 | 0.20 | 0.20 | 0.20 |
| Hardness(Shore C) | 40 | 38 | 33 | 30 | 25 |
| Rebound(%) | 5 | 5 | 5 | 5 | 5 |
| Tensile strength(kg/cm² ) | 9.8 | 8.9 | 8.6 | 8.3 | 7.9 |
| Elongation(%) | 250 | 250 | 250 | 250 | 240 |
| Tear strength(kg/cm) | 4.5 | 4.1 | 4.0 | 3.8 | 3.5 |
| Compression set (%) | 2 | | | | |

Where, 1) Mold temperature is 60° C, 2) Cream time/rising time/tack free time/demolding time is 7 sec./85 sec./60 sec./7 min. respectively, 3) Free-blown specific gravity is 0.085g/cc, 4) The testing condition of physical property is based upon KSM-6518 testing method of the Korean Industrial Standard at the atmospheric temperature of 20° C.

### EXAMPLE 5 :

Reacting poly(propyleneoxide) having a hydroxy value of 400 mg KOH/g with 4,4'-methylene-bis(phenylisocyanate) at the temperature of 100° C while adding dried inert gas, and thus, manufacturing the prepolymer containing residual isocyanate of 10% by weight.

On the other hand, mixing poly(propyleneoxide) having a hydroxy value of 32 mg KOH/g, poly(glycerin/propyleneoxide) having a hydroxy value of 37 mg KOH/g and poly(ethylenediamine/propyleneoxide) having a hydroxy value of 64 mg KOH/g based upon the equivalent ratio of 3:1:3 respectively. As additives, adding 4 pbw 1,6-hexamethylene diamine as reaction accelerator, 10 pbw of a known organo metal reaction accelerator rapidly agitated and dispersed into poly(propyleneoxide), and 3 pbw polyethylene siloxane respectively, per 100 pbw polyol. As plasticizers, adding 15 pbw D.O.P. per 100 pbw polyol. At the increased temperature of 80° C, agitating and mixing the compound for 1.5 hours to manufacture the resin whose water content is in the range of 1.5 ± 0.01 by weight.

Other processing is conducted in a same manner as do in EXAMPLE 1. As a result, the physical property of molding's specimen is shown in Table 5.

**Table 5**

| (Physical properties of specimen having 10mm in thickness) | | | | | |
|---|---|---|---|---|---|
| Equivalent ratio between isocyanate and hydroxy | 1.50 | 1.45 | 1.40 | 1.35 | 1.30 |
| Specific gravity of moding(g/cc) | 0.25 | 0.25 | 0.25 | 0.25 | 0.25 |
| Hardness(Shore C) | 48 | 46 | 44 | 42 | 40 |
| Rebound(%) | 6 | 6 | 6 | 6 | 7 |
| Tensile strength(kg/cm² ) | 11.2 | 11.0 | 10.4 | 10.2 | 9.6 |
| Elongation(%) | 250 | 250 | 250 | 250 | 250 |
| Tear strength(g/cm) | 3.9 | 3.8 | 3.6 | 3.0 | 2.5 |
| Compression set (%) | 2 | | | | |

Where, 1) Mold temperature is 60° C, 2) Cream time/rising time/tack free time/demolding time is 7 sec./95 sec./50 sec./7 min. respectively, 3) Free-blown specific gravity is 0.116g/cc, 4) The testing condition of physical property is based upon KSM-6518 testing method of the Korean Industrial Standard at the atmospheric temperature of 20° C.

## Claims

1. An impact resistant polyurethane foam having a rebounding elasticity of less than 10 % and a compression set of less than 5 % according to KSM 6518 and obtainable by reaction of
a) a diisocyanate prepolymer containing a residual isocyanate content of from 5 % to 25 % by weight manufactured by reacting a diisocyanate and poly(propyleneoxide)-diol having a hydroxyl value of from 30 to 500 mg KOH/g, with
b) a resin comprising
1. a poly(propyleneoxide)-diol having a hydroxyl value of from 25 to 100 mg KOH/g,
2. a poly(glycerin/propylyeneoxide)-triol having a hydroxyl value of from 20 to 1000 mg KOH/g,
3. a poly(pentaerythritol/polyethyleneoxide)-tetraol or poly(ethylenediamine/propyleneoxide)-tetraol having a hydroxyl value of from 50 to 220 mg KOH/g,
4. a diamine selected from tetramethylethylene diamine, tetraethylmethylene diamine, diethylpiperazine and triethylene diamine,
5. an organometal accelerator selected from stannous octoate, dibutylene diacetate, sodium bicarbonate, lead octoate and potassium acetate,
6. an aromatic plasticizer selected from dimethylphthalate, diethylphthalate, diisobutylphthalate, dibutylphthalate, dioctylphthalate, dinonylphthalate, diisooctylphthalate, diisodecylphthalate, dipropyleneglycolbenzoate, tricresylphosphate, octyldiphenylphosphate and cresyldiphenylphosphate,
7. a polyalkyl or polyalkoxy siloxane, and
8. a water content of 0,3 to 3,0 % by weight.

## Patentansprüche

1. Schlagfester Polyurethanschaum mit einer Rückprallelastizität von weniger als 10 % und einer bleibenden Verformung von weniger als 5 % gemäß KSM 6518 und erhältlich durch Umsetzung
a) eines Diisocyanatvorpolymers mit einem Rest-Isocyanatgehalt von 5 bis 25 Gew.-%, das durch Umsetzung eines Diisocyanats und eines Poly-(propylenoxid)-diols mit einer Hydroxylzahl von 30 bis 500 mg KOH/g hergestellt wurde, mit
b) einem Harz, welches
1. ein Poly-(propylenoxid)-diol mit einer Hydroxylzahl von 25 bis 100 mg KOH/g,
2. ein Poly-(glycerin/propylenoxid)-triol mit einer Hydroxylzahl von 20 bis 1000 mg KOH/g,
3. ein Poly-(pentaerythrit/polyethylenoxid)-tetraol oder Poly-(ethylendiamin/propylenoxid)-tetraol mit einer Hydroxylzahl von 50 bis 220 mg KOH/g,
4. ein Diamin, welches unter Tetramethylethylendiamin, Tetraethylmethylendiamin, Diethylpiperazin und Triethylendiamin ausgewählt ist,
5. einen metallorganischen Beschleuniger, der unter Zinn(II)-octoat, Dibutylendiacetat, Natriumbicarbonat, Bleioctoat und Kaliumacetat ausgewählt ist,
6. einen aromatischen Weichmacher, der unter Dimethylphthalat, Diethylphthalat, Diisobutylphthalat, Dibutylphthalat, Dioctylphthalat, Dinonylphthalat, Diisooctylphthalat, Diisodecylphthalat, Dipropylenglycolbenzoat, Tricresylphosphat, Octyldiphenylphosphat und Cresyldiphenylphosphat ausgewählt ist,
7. ein Polyalkyl- oder Polyalkoxysiloxan und
8. einen Wassergehalt von 0,3 bis 3,0 Gew.-% umfaßt.

## Revendications

1. Mousse de polyuréthanne résistant au choc, ayant une résilience inférieure à 10 % et une déformation permanente par sollicitation de compression inférieure à 5 %, selon KSM 6518, que l'on peut obtenir en faisant réagir :
a) un prépolymère de diisocyanate ayant une teneur en isocyanates résiduels comprise entre 5 et 25 % en poids, obtenu par réaction d'un diisocyanate et d'un poly(oxyde de propylène)-diol ayant un indice d'hydroxyle compris entre 30 et 500 mg KOH/g, avec
b) une résine comprenant :
1. un poly(oxyde de propylène)-diol ayant un indice d'hydroxyle compris entre 25 et 100 mg KOH/g,
2. un poly(glycérol/oxyde de propylène)-triol ayant un indice d'hydroxyle compris entre 20 et 1000 mg KOH/g,
3. un poly(pentaérythritol/poly(oxyde d'éthylène))-tétraol ou un poly(éthylènediamine/oxyde de propylène)tétraol ayant un indice d'hydroxyle compris entre 50 et 220 mg KOH/g,
4. une diamine choisie parmi la tétraméthyléthylènediamine, la tétraéthylméthylènediamine, la diéthylpipérazine et la triéthylènediamine,
5. un accélérateur organométallique choisi parmi l'octanoate stanneux, le diacétate de dibutylène, le bicarbonate de sodium, l'octanoate de plomb et l'acétate de potassium,
6. un plastifiant aromatique choisi parmi le phtalate de diméthyle, le phtalate de diéthyle, le phtalate de diisobutyle, le phtalate de dibutyle, le phtalate de dioctyle, le phtalate de dinonyle, le phtalate de diisooctyle, le phtalate de diisodécyle, le benzoate de dipropylèneglycol, le phosphate de tricrésyle, le phosphate d'octyle et de diphényle, et le phosphate de crésyle et de diphényle,
7. un polyalkylsiloxane ou un polyalcoxysiloxane, et
8. 0,3 à 3,0 % en poids d'eau.
